# EUROPEAN PATENT SPECIFICATION

(11) **EP 2 073 425 B1**
(45) Date of publication and mention of the grant of the patent: **17.12.2014**
(21) Application number: 08162766.3
(22) Date of filing: 21.08.2008
(51) Int. Cl.: H04L 1/16, H04L 1/18

(54) **Apparatus and method for optimizing status report time in mobile communication system**
Vorrichtung und Verfahren zur Optimierung der Statusberichtszeit in einem mobilen Kommunikationssystem
Appareil et procédé d'optimisation de temps de rapport de statut dans un système de communication mobile

(30) Priority: 17.12.2007 KR 20070132444
(43) Date of publication of application: 24.06.2009
(73) Proprietor: Electronics and Telecommunications Research Institute, Daejon-si 305-350 (KR); KTFreetel Co., Ltd., Songpa-gu Seoul (KR)
(72) Inventor: Choi, Sung-gu, Daejeon-si (KR); Shin, Yeon-seung, Daejeon-si (KR); Kim, Yeong-jin, Daejeon-si (KR); Jun, Kyung-koo, Incheon-si (KR)
(74) Representative: Betten & Resch

(56) References cited:
- EP-A2- 1 689 134
- US-A1- 2006 013 257
- US-A1- 2006 291 395

## Description

### BACKGROUND OF THE INVENTION

### FIELD OF THE INVENTION

The present invention relates to operating a Radio Link Control (RLC) protocol of a mobile communication system, and more particularly, to an apparatus and method for optimizing a status report time, which is one of Automatic Repeat Request (ARQ) elements of RLC.

### DESCRIPTION OF THE RELATED ART

A Radio Link Control (RLC) protocol is involved in data transmission between an eNodeB and a User Equipment (UE) in a next-generation mobile communication system, more specifically, a Third-Generation (3G) Long Term Evolution (LTE) system. An Automatic Repeat Request (ARQ) function of the RLC protocol detects a part of received data lost due to an error, etc., and requests a transmitter for retransmission, thereby enabling reliable data transmission. For the ARQ function, a status report is used. For the purpose of a status report, a transmitter uses serial numbers in sequence upon transmitting data, and a receiver examines continuity of serial numbers of received data to detect that there is missing data. Then, the receiver performs a status report on successfully received data and non-received data, thereby informing the transmitter which data needs to be retransmitted.

To facilitate understanding of such details, an eNodeB and RLC of a 3G LTE system will be described below.

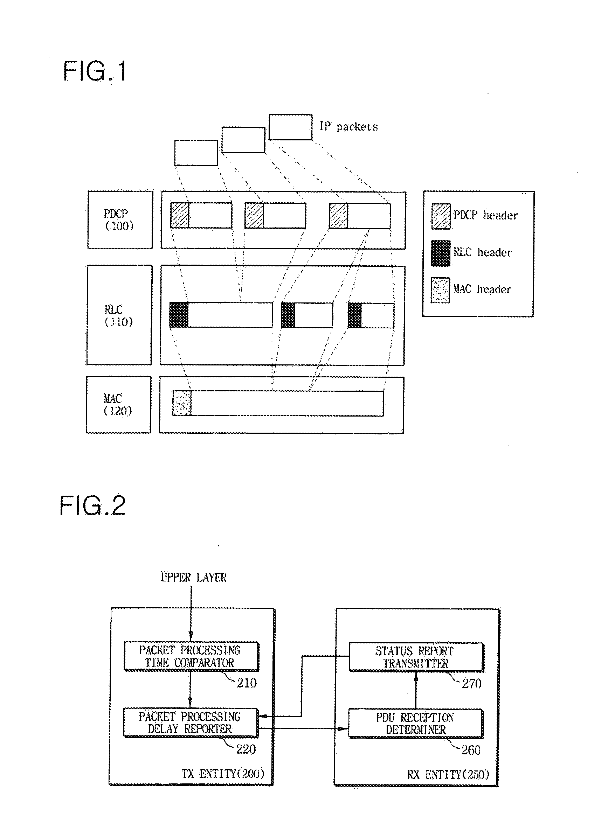

Communication between an eNodeB and a UE is performed using data in Internet Protocol (IP) packet units. FIG. 1 shows a downlink path consisting of layers from an eNodeB to a UE. First, IP packets arriving at an eNodeB are processed in a Packet Data Convergence Protocol (PDCP) layer 100, and thereby PDCP headers are added in front of the IP packets, which are referred to as PDCP Protocol Data Units (PDUs).

In the next layer, i.e., an RLC layer 110, a concatenation function of inserting several PDCP PDUs in one RLC PDU or a segmentation function of dividing one PDCP PDU into two or more RLC PDUs is performed. Then, RLC headers are added to the concatenated or segmented PDUs, and thus RLC PDUs are generated.

In a slower layer, i.e., a Media Access Control (MAC) layer 120, MAC headers are added to the RLC PDUs to generate MAC PDUs, and then the MAC PDUs are transmitted. A UE receiving the MAC PDUs extracts the original IP packets through MAC, RLC and PDCP layers in reverse order of the eNodeB. An uplink data path from the UE to the eNodeB also has the same layer structure.

Meanwhile, an RLC layer has three modes, i.e., a Transparent Mode (TM), an Unacknowledgement Mode (UM) and an Acknowledgement Mode (AM). In the TM, data is transmitted without an RLC header added to the data. The UM does not support the ARQ function. The AM supports the ARQ function and is used for reliable transmission of data such as Transmission Control Protocol (TCP) traffic. In the AM, a transmitter is referred to as a Transmitter (Tx) entity, and a receiver is referred to as a Receiver (Rx) entity. In particular, a PDU of the AM is referred to as an Acknowledgement Mode Data (AMD) PDU. Since a status report time of the present invention relates to the AM, an RLC AM will be described below.

The RLC AM enables reliable data transmission using an ARQ. To this end, a Tx entity stores successive serial numbers in headers of AMD PDUs, i.e., PDUs, and transmits the PDUs. From a missing number among the serial numbers of the received PDUs, an Rx entity detects that there is a non-received PDU. Then, the Rx entity transmits a status report to the Ix entity, thereby informing the Tx entity of the received PDUs or the non-received PDU. A status report is transmitted in two cases. One case is when a Tx entity requests the status report, and the other case is when a non-received PDU is detected. A Tx entity sets a poll bit among fields of a PDU header to 1 in order to request a status report.

Meanwhile, a report time must be optimized for a status report. This is because a status report requires transmission resources and thus becomes an overhead. More specifically, too many status reports in short time cause a large overhead, which is not preferable. On the other hand, too little status reports may cause packet loss, which is not preferable either. Therefore, to determine a status report time, three things must be considered together: 1) a queue state of a Tx entity, 2) a Layer 2 Packet Delay Budget (L2PDB) and 3) a possibility of causing unnecessary retransmission.

As for 1) a queue state of a Tx entity, when a time interval between status reports is too long, an overflow occurs in a queue of the Tx entity, and thus packet loss may be caused. This is because the Tx entity removes from the queue only PDUs checked to be received through a status report.

As for 2) an L2PDB, when a time interval between status reports is too long, PDUs not retransmitted within an appropriate time are delayed more than the L2PDB. Thus, Quality of Service (QoS) is not satisfied.

As for 3) a possibility of causing unnecessary retransmission, when a time interval between status reports is too short, a PDU normally received and processed in an MAC layer may be incorrectly determined as a non-received PDU, and thus unnecessary retransmission may be caused. This case may happen when the corresponding PDU is retransmitted by a Hybrid Automatic Repeat Request (HARQ) of the MAC layer several times because a PDU transmitted behind the corresponding PDU is transmitted to an Rx entity prior to the corresponding PDU.

For these reasons, technology for optimizing a status report time is required. Currently disclosed methods include a first method using a status prohibit timer, a second method of determining a status report time according to the number of received PDUs, and a third method of delaying a status report on a non-received PDU for a specific time.

According to the first method, an Rx entity maintains the minimum time interval between successive status reports using a timer set for a fixed time. In other words, after a status report is performed, the timer is operated to prevent transmission of a next status report until a time interval is completed. Although this method is not effective when a large amount of TCP traffic is generated, it has been adopted as a current standard method of Third-Generation Partnership Project (3GPP).

According to the second method, a status report is transmitted every time PDUs numbering more than a specific number are received. This method, which was proposed by Nokia, is not effective when a large amount of TCP traffic is generated either.

According to the third method, a status report on a non-received PDU is delayed for a specific time without condition. Using this method, it is possible to prevent unnecessary retransmission as described above. However, delay of a status report may lead to delay of retransmission, and the delay of retransmission may generate a packet delayed more than an L2PDB.

US 2006/291395 A1 discloses a packet transmission control method and apparatus for packet transmissions between a transmitting side and a receiving side in a mobile communication system, wherein packets transmitted by the transmitting side are acknowledged by the receiving side, and unacknowledged packets are retransmitted to the receiving side. The method comprises at least one of the steps of: scheduling of packets, wherein packets not yet acknowledged are retransmitted only when no packets not yet transmitted to the receiving side are available at the transmitting side, and polling the receiving side to acknowledge transmitted packets on the basis of a packet counter value and a timer value.

US 2006/013257 A1 relates to methods and systems for use in a communication system to selectively delay transmitting a second negative acknowledgement (NAK) after an initial NAK has already been sent requesting retransmission of a corrupted packet. The receiving entity initiates a NAK prohibit timer associated with a specific NAK which prevents status reports to transmitting entity from including a retransmission of the specific NAK until the timer expires. Use of the NAK prohibit timer reduces the likelihood of spurious retransmissions from the transmitting entity caused by a second NAK from the receiving entity when the retransmission process has already been initiated.

### SUMMARY OF THE INVENTION

The present invention provides an apparatus and method for optimizing a status report time capable of determining an optimal status report time related to an Automatic Repeat Request (ARQ) of a Radio Link Control (RLC) protocol in synthetic consideration of an overhead, a queue state of a Transmitter (Tx) entity, a Layer 2 Packet Delay Budget (L2PDB), a possibility of unnecessary retransmission, etc.

The present invention also provides a method of controlling Quality of Service (QoS) on the basis of optimization of a status report time, i.e, compatible with an RLC layer standard defined by Third-Generation Partnership Project (3GPP) while satisfying QoS required for an RLC layer of a next-generation mobile communication system.

Additional aspects of the invention will be set forth in the description which follows, and in part will be apparent from the description, or may be learned by practice of the invention.

The present invention is defined in the independent claims. The dependent claims define embodiments. Embodiments that do not fall under the scope of the claims are useful for understanding the invention.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the aspects of the invention.
FIG. 1 shows an example of layer-specific processes for transmitting Internet Protocol (IP) packets from an eNodeB to a User Equipment (UE).
FIG. 2 is a block diagram of an apparatus for optimizing a status report time in a Third-Generation (3G) Long Term Evolution (LTE) system according to an exemplary embodiment of the present invention.
FIG. 3 is a flowchart illustrating operation of the apparatus for optimizing a status report time shown in FIG. 2.
FIG. 4 illustrates a basis for calculating a packet delay threshold value used in a packet processing delay comparator shown in FIG. 2.
FIGS. 5 and 6 illustrate a process of setting poll bits of a Protocol Data Unit (PDU) including a packet expected to be delayed and successive PDUs according to an exemplary embodiment of the present invention.

### DETAILED DESCRIPTION OF EXEMPLARY EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. Like reference numerals in the drawings denote like elements.

FIG. 2 is a block diagram of an apparatus for optimizing a status report time in a next-generation mobile communication system according to an exemplary embodiment of the present invention. The apparatus for optimizing a status report time is installed in an eNodeB and a User Equipment (UE) to request bidirectional data retransmission between the eNodeB and the UE.

As illustrated in FIG. 2, the apparatus for optimizing a status report time installed in an eNodeB and a UE to retransmit data between the eNodeB and the UE in a Third-Generation (3G) Long Term Evolution (LTE) system, can be roughly separated into a Transmitter (Tx) entity 200 and a Receiver (Rx) entity 250.

The Tx entity 200 includes a packet processing time comparator 210 for comparing a set packet delay threshold value with a time for processing an Internee Protocol (IP) packet to be transmitted, and a packet processing delay reporter 220 for setting data, i.e., a poll bit, for identifying an IP packet delayed more than the packet delay threshold value according to the comparison result and transmitting the set data to the Rx entity 250.

More specifically, the packet processing delay reporter 220 sets poll bits in a Protocol Data Unit (PDU) including the packet delayed more than the packet delay threshold value and one or more PDUs transmitted after the PDU, and transmits all the PDUs to the Rx entity 250.

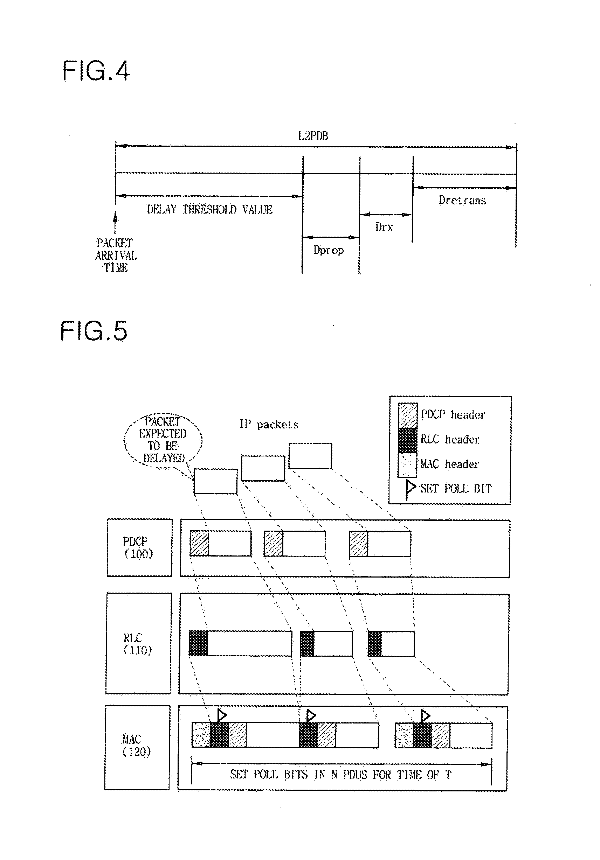

The packet processing time comparator 210 stores the packet delay threshold value to distinguish a packet delayed to be processed from other packets. The packet delay threshold value Dₘₐₓ may be set by subtracting an expected necessary time from the maximum time for which a packet can stay in link layers of both a Tx and an Rx. In other words, the packet delay threshold value Dₘₐₓ is set by subtracting a radio transmission delay Dₚᵣₒₚ, an Rx processing delay Dᵣₓ and a delay Dᵣₑₜᵣₐₙₛ caused by retransmission from a Layer 2 Packet Delay Budget (L2PDB), as illustrated in FIG. 4. In particular, the delay Dᵣₑₜᵣₐₙₛ caused by retransmission varies according to the number of expected retransmissions. The more the number of retransmissions is expected, the smaller the packet delay threshold value Dₘₐₓ. In the result, more packets will be delayed more than the packet delay threshold value Dₘₐₓ. Therefore, the delay Dᵣₑₜᵣₐₙₛ caused by retransmission may be set to an optimal value by an upper layer or a network administrator.

Meanwhile, the Rx entity 250 includes a PDU reception determiner 260 for determining whether or not a PDU transmitted from a Tx entity of a communication counterpart is normally received, and a status report transmitter 270 for reporting a status to the Tx entity at different times according to a result of determining whether or not the PDU is normally received and a result of receiving a PDU containing a packet processed in the Tx entity for a longer time than a packet delay threshold value.

More specifically, the PDU reception determiner 260 checks serial numbers of received PDUs, determines whether or not there is a non-received PDU, and transfers a determination result and related data to the status report transmitter 270. The status report transmitter 270 recognizes that the PDUs are normally received, i.e., without loss, through the data transferred from the PDU reception determiner 260. Here, the status report transmitter 270 estimates the length of a Tx entity queue every time each of the PDUs is received, and reports a status to the Tx entity when the estimated value exceeds a previously set threshold value. The status report transmitter 270 estimates the length of the Tx entity queue by subtracting a serial number of a PDU corresponding to the last status report from a serial number of a currently received PDU. In addition, when there is a non-received PDU, the status report transmitter 270 performs the status report immediately or after a specific time according to whether or not data, i.e., a poll bit, for identifying an IP packet delayed more than the delay threshold value is successively set in the currently received PDU.

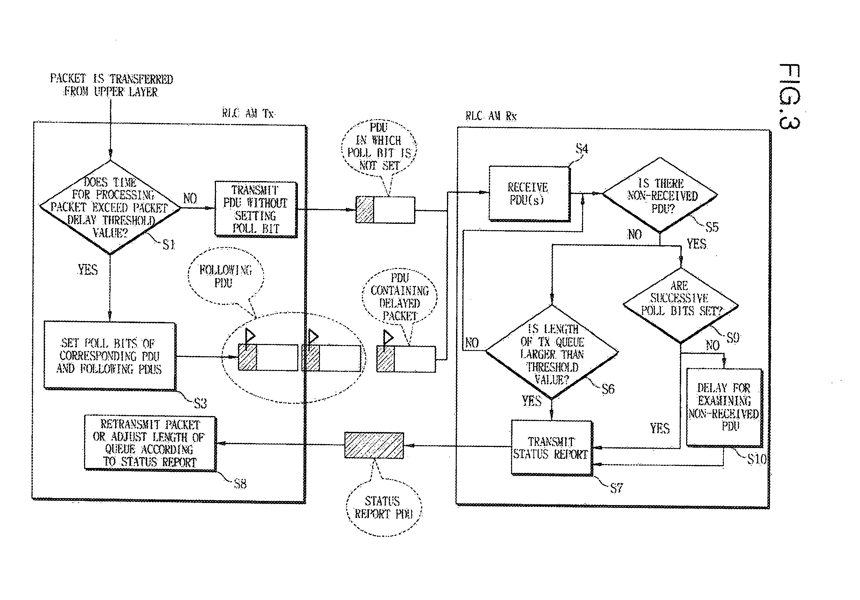

Operation for a status report between an eNodeB having the above described Tx entity 200 and a UE having the above described Rx entity 250 will be described with reference to FIGS. 3, 5 and 6.

Referring to FIG. 3, the packet processing time comparator 210 of the Tx entity 200 of an eNodeB determines whether or not a time for processing a packet transferred from an upper layer exceeds a previously set packet delay threshold value (operation S1). When it is determined that the time for processing the transferred packet does not exceed the previously set packet delay threshold value, the packet processing delay reporter 220 transmits a PDU containing the packet to the Rx entity 250 without setting a poll bit (operation S2).

On the other hand, when it is determined in operation S1 that the time for processing the transferred packet exceeds the previously set packet delay threshold value, the packet processing delay reporter 220 sets poll bits for the packet delayed for more than the packet delay threshold value in a PDU containing the packet and one or more PDUs following the PDU to 1 (operation S3), and transmits all the PDUs to the Rx entity 250, thereby reporting that the packets are delayed.

FIG. 5 illustrates a PDU in which a poll bit indicating that a packet transmitted from the Tx entity 200 is delayed is set. Referring to FIG. 5, headers are added to IP packets in a Packet Data Convergence Protocol (PDCP) layer, and poll bits for one packet expected to be delayed and the following packets are set to 1 in a Radio Link Control (RLC) layer. In the example of FIG. 5, poll bits are set in a maximum of 2 PDUs for a time of T. The above described operation of successively setting poll bits and reporting a status of a packet delayed to be processed to the Rx entity 250 has the following advantages.

First, the RLC PDU format does not need to be modified. In the current format, a field for transferring data relating to delay is not defined. Thus, the format needs to be modified when data relating to delay is added. However, the format modification is not easy because it demands a standardization process.

Second, even when some PDUs are not transmitted due to an error, poll bits of other PDUs can transfer data relating to delay. If a poll bit of a delayed specific PDU alone is set and transmitted, data relating to delay cannot be transferred when the PDU is lost. However, this problem does not occur in the present invention.

Third, setting of a poll bit does not cause an overhead and thus is efficient.

Fourth, since poll bits are hardly set in succession in normal operation, they can be used for transferring data relating to delay. In addition, discontinuously set poll bits can perform their original function of requesting a status report, and have no influence on their own function.

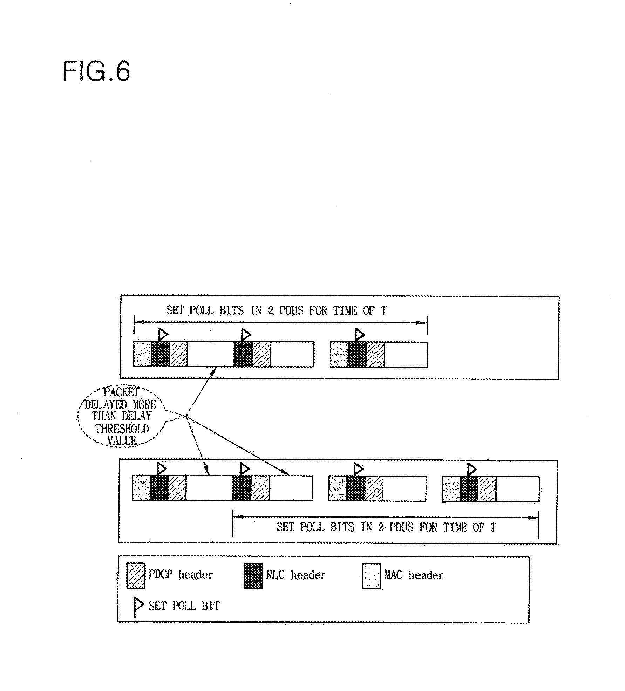

In FIG. 5, a process of setting poll bits for one packet delayed more than a delay threshold value is illustrated, but the present invention is not limited to this case. In other words, even when M successive packets are delayed more than the delay threshold value, the above described operation is available. Actually, successive packets are frequently delayed more than a delay threshold value because a group of packets rather than a single packet are delayed. Even when a group of packets are delayed, the lengths of only successive PDUs in which poll bits are set increase as illustrated in FIG. 6. The upper diagram of FIG. 6 illustrates a case in which one packet is delayed more than a threshold value, and the lower diagram illustrates a case in which two successive packets are delayed more than a threshold value. Therefore, an operation of reporting an IP packet delayed more than a packet delay threshold value to an Rx may be used for searching for a group of packets delayed more than the packet delay threshold value.

As described above, when the Tx entity 200 successively sets poll bits for a packet delayed more than a packet delay threshold value in a PDU containing the packet and the following PDUs and transmits all the PDUs, the Rx entity 250 reports a status to the Tx entity 200 at different times according to the following process, which will be described below with reference to FIG. 3.

First, the PDU reception determiner 260 receives PDUs transmitted from the Tx entity 200 (operation S4) and determines whether or not the PDUs are normally received (operation S5). This may be determined according to whether or not serial numbers of the received PDUs are successive. When it is determined in operation S5 that there is no non-received PDU, i.e., the serial numbers of the received PDUs are successive, the status report transmitter 270 delays a status report time as much as possible to minimize an overhead caused by a status report. The delay may be determined not to occupy the entire queue space of the Tx entity 200. To this end, the status report transmitter 270 estimates the length of a queue of the Tx entity 200 by subtracting a serial number of a PDU corresponding to the last status report from a serial number of a currently received PDU every time a PDU is received. When it is determined in operation S6 that the estimated value exceeds a previously set threshold value, the status report transmitter 270 reports the status to the Tx entity 200 (operation S7). In this way, it is possible to delay a status report time as much as possible when PDUs are normally received, and simultaneously optimize the number of status reports.

Poll bits of received successive PDUs may be set. In this case, the PDUs are successfully received, and there is no need for retransmission. Therefore, this case has no influence on determining a status report time.

Meanwhile, when it is determine in operation S5 that there is a non-received PDU, the status must be reported to the Tx entity 200 to retransmit the corresponding packet. In this case, a status report time must be determined in consideration of a packet delay and an overhead caused by the status report together. For example, when a PDU containing a packet delayed more than a packet delay threshold value is not received, the status report must be immediately performed. Otherwise, it is better to delay the status report slightly.

In consideration of the two cases, when there is a non-received PDU, the Rx entity 250 determines whether or not successive poll bits are set in the received PDUs (operation S9). When successive poll bits are set, the Rx entity 250 immediately reports the status to the Tx entity 200 (operation S7). Otherwise, the Rx entity 250 delays a status report for a specific time (operation S10), and then performs the status report (operation S7). When successive poll bits are not set, the status report transmitter 270 determines whether or not the non-received PDU is actually lost, and then waits for a status report for a while (operation S10). This is because a PDU determined as the non-received PDU may be actually being processed by a Hybrid Automatic Repeat Request (HARQ) of a Media Access Control (MAC) layer. When it is examined whether or not the non-received PDU is lost, it is possible to prevent unnecessary transmission of a PDU. In addition, when a new PDU arrives during the delay, data relating to arrival of the new PDU may be added to status data, such that the number of status reports can be reduced.

As described above with reference to exemplary embodiments, according to the present invention, a Tx entity sets data, a poll bit, for identifying an IP packet delayed more than a delay threshold value in a PDU and transmits the PDU to an Rx entity, and the Rx entity determines a status report time in synthetic consideration of a system overhead according to a packet processing delay of the Tx entity and a status report, a queue state of the Tx entity, an L2PDB, a solution for preventing unnecessary retransmission, and so on. Therefore, the frequency of status reports is optimized, such that an overhead caused by the status reports can be reduced. In addition, when a delayed PDU for packet processing is not received, a status report is immediately performed, such that the corresponding packet can be rapidly retransmitted.

As apparent from the above description, the present invention determines a status report time related to an ARQ scheme of an RLC protocol in synthetic consideration of a system overhead according to a packet processing delay of a Tx entity and a status report, a queue state of the Tx entity, the maximum time, i.e., an L2PDB, that may be taken for a packet to be transmitted from an RLC layer of the Tx (or an Rx) entity to an RLC layer of an Rx (or the Tx) entity, a possibility of unnecessary retransmission, and so on. Therefore, the frequency of status reports is optimized to reduce an overhead caused by the status reports. In addition, when a PDU delayed for packet processing is not received, a status report is immediately performed, such that the corresponding packet can be rapidly retransmitted.

Furthermore, the present invention does not require a new process not defined in a standard or a modification of a data format, and thus is compatible with a standard of an RLC layer defined in a next-generation mobile communication network.

It will be apparent to those skilled in the art that various modifications and variations can be made in the present invention without departing from the scope of the invention. Thus, it is intended that the present invention covers the modifications and variations of this invention provided they come within the scope of the appended claims.

## Claims

1. An apparatus for optimizing a status report time required for data retransmission between an eNodeB and a User Equipment, UE, in a mobile communication system, the apparatus adapted to operate as a Transmitter, Tx, entity (200) comprising:
a packet processing time comparator (210) for comparing a set packet delay threshold value with a processing time of an Internet Protocol, IP, packet to be transmitted; and
a packet processing delay reporter (220) for setting poll bits for identifying the IP packet delayed more than the packet delay threshold value according to the comparison result in a Protocol Data Unit, PDU, and one or more following PDUs containing the IP packet delayed, and transmitting all the PDUs to a Receiver, Rx, entity (250), wherein when the transmitted PDUs with set poll bits have a non-received PDU at the Rx entity, an immediate status report is transmitted from the Rx entity to the Tx entity.

2. The apparatus of claim 1, wherein the packet processing time comparator (210) stores the packet delay threshold value set by subtracting a radio transmission delay, an Rx processing delay and a delay caused by retransmission from a maximum time taken for the packet to be transmitted from a Tx Radio Link Control, RLC, layer to an Rx RLC layer.

3. The apparatus according to claim 1 or 2, further adapted to operate as the Receiver, Rx, entity (250) comprising:
a Protocol Data Unit, PDU, reception determiner (260) for determining whether or not the PDU transmitted from the Transmitter, Tx, entity (200) is received without loss; and
a status report transmitter (270) for reporting a status to the Tx entity (200) at different times according to a result of determining whether or not the PDU is received without loss and a result of receiving a PDU with poll bits set for identifying that the IP packet is contained which has been processed in the Tx entity (200) for a longer time than the packet delay threshold value,
wherein the status report transmitter (270) estimates a length of the Tx entity queue every time a PDU is received when the PDU is received without loss, and reports the status to the Tx entity (200) when the estimated value exceeds the previously set threshold value, and
wherein when there is a non-received PDU, the status report transmitter (270) performs the status report immediately or after a specific time according to whether or not poll bits for identifying the Internet Protocol, IP, packet delayed more than the delay threshold value are successively set in the received PDU respectively.

4. The apparatus of claim 3, wherein the status report transmitter (270) estimates the length of the Tx entity queue by subtracting a serial number of a PDU corresponding to a last status report from a serial number of a currently received PDU.

5. A method of optimizing a status report time required for data retransmission between an eNodeB and a User Equipment, UE, in a mobile communication system, comprising:
comparing a set packet delay threshold value with a processing time of an Internet Protocol, IP, packet to be transmitted; and
when the processing time of the IP packet to be transmitted exceeds the set packet delay threshold value, setting poll bits in a Protocol Data Unit, PDU, and one or more following PDUs containing the IP packet delayed, and transmitting all the PDUs to a Receiver, Rx, entity (250),
the method further comprising:
receiving the PDUs transmitted from a Transmitter, Tx, entity (200);
checking serial numbers of the received PDUs, and determining whether or not there is a non-received PDU;
when the PDUs are received without loss, estimating a length of the Tx entity queue every time each of the PDUs is received, and reporting a status to the Tx entity (200) when the estimated value exceeds the previously set threshold value; and
when there is a non-received PDU, determining whether or not successive poll bits are set in the received PDUs, and reporting a status to the Tx entity (200) immediately or after a specific time respectively.

6. The method of claim 5, further comprising:
when a status report is received from the Rx entity (250), retransmitting the packet or readjusting a length of the Transmitter, Tx, entity queue.

7. The method of claim 6, wherein the packet delay threshold value is determined by subtracting a radio transmission delay, an Rx processing delay and a delay caused by retransmission from a maximum time taken for the packet to be transmitted from a Transmitter, Tx, Radio Link Control, RLC, layer to an Rx RLC layer.

8. The method of claim 6, wherein the length of the Tx entity queue is estimated by subtracting a serial number of a PDU corresponding to a last status report from a serial number of a currently received PDU.

## Patentansprüche

1. Vorrichtung zur Optimierung einer Statusberichtszeit, welche zur Datensendewiederholung zwischen einem eNodeB und einer Nutzerausstattung, UE, erforderlich ist, in einem Mobilkommunikationssystem, wobei die Vorrichtung dazu ausgelegt ist, als eine Sender, Tx, -Entität (200) zu funktionieren, umfassend:
eine Paketverarbeitungszeitvergleichseinheit (210) zum Vergleichen eines eingestellten Paketverzögerungsschwellwerts mit einer Verarbeitungszeit eines zu sendenden Internetprotokoll, IP, -Pakets; und
eine Paketverarbeitungsverzögerungsberichtseinheit (220) zum Setzen von Poll-Bits zum Identifizieren des um mehr als den Paketverzögerungsschwellwert verzögerten IP-Pakets in Übereinstimmung mit dem Vergleichsergebnis in einer Protokolldateneinheit, PDU, und einer oder mehr nachfolgenden PDUs, welche das verzögerte IP-Packet enthalten, und Senden aller PDUs an eine Empfänger, Rx, -Entität (250), wobei, wenn die gesendeten PDUs mit gesetzten Poll-Bits eine nicht empfangene PDU an der Rx-Entität aufweisen, ein Sofortstatusbericht von der Rx-Entität an die Tx-Entität gesendet wird.

2. Vorrichtung nach Anspruch 1, wobei die Paketverarbeitungszeitvergleichseinheit (210) den Paketverzögerungsschwellwert speichert, der durch Subtrahieren einer Funksendeverzögerung, einer Rx-Verarbeitungsverzögerung und einer durch Sendewiederholung verursachten Verzögerung von einer Maximalzeit eingestellt wird, welche benötigt wird, um das Paket von einer Tx-Funkverbindungssteuerung, RLC, -Schicht an eine Rx-RLC-Schicht zu senden.

3. Vorrichtung nach Anspruch 1 oder 2, ferner dazu ausgelegt, als die Empfänger, Rx, -Entität (250) zu funktionieren, umfassend:
eine Protokolldateneinheit, PDU, -Empfangsbestimmungseinheit (260) zum Bestimmen, ob die von der Sender, Tx, -Entität (200) gesendete PDU ohne Verlust empfangen ist oder nicht; und
einen Statusberichtssender (270) zum Berichten eines Status an die Tx-Entität (200) zu unterschiedlichen Zeiten in Übereinstimmung mit einem Ergebnis der Bestimmung, ob die PDU ohne Verlust empfangen ist, und einem Ergebnis des Empfangs einer PDU mit Poll-Bits, welche zum Identifizieren gesetzt sind, dass das IP-Paket enthalten ist, welches in der Tx-Entität (200) für eine längere Zeit als der Paketverzögerungsschwellwert verarbeitet wurde,
wobei der Statusberichtssender (270) eine Länge der Tx-Entitätswarteschlange jedes Mal, wenn eine PDU empfangen wird, schätzt, falls die PDU ohne Verlust empfangen wird, und den Status an die Tx-Entität (200) berichtet, wenn der geschätzte Wert den vorher eingestellten Schwellwert übersteigt, und
wobei, wenn eine nicht empfangene PDU vorhanden ist, der Statusberichtssender (270) den Statusbericht sofort oder nach einer bestimmten Zeit in Übereinstimmung damit durchführt, ob Poll-Bits zum Identifizieren des um mehr als den Verzögerungsschwellwert verzögerten Internetprotokoll, IP, -Pakets aufeinanderfolgend in den empfangenen PDUs vorhanden sind oder nicht.

4. Vorrichtung nach Anspruch 3, wobei der Statusberichtssender (270) die Länge der Tx-Entitätswarteschlange durch Subtrahieren einer Seriennummer einer PDU entsprechend eines letzten Statusberichts von einer Seriennummer einer gegenwärtig empfangenen PDU schätzt.

5. Verfahren zum Optimieren einer Statusberichtszeit, welche zur Datensendewiederholung zwischen einem eNodeB und einer Nutzerausstattung, UE, erforderlich ist, in einem Mobilkommunikationssystem, umfassend:
Vergleichen eines eingestellten Paketverzögerungsschwellwerts mit einer Verarbeitungszeit eines zu sendenden Internetprotokoll, IP, -Pakets; und
wenn die Verarbeitungszeit des zu sendenden IP-Pakets den eingestellten Paketverzögerungsschwellwert übersteigt, Setzen von Poll-Bits in einer Protokolldateneinheit, PDU, und ein oder mehr nachfolgenden PDUs, welche das verzögerte IP-Paket enthalten, und Senden aller PDUs an eine Empfänger, Rx, -Entität (250),
wobei das Verfahren ferner umfasst:
Empfangen der von einer Sender, Tx, -Entität (200) gesendeten PDUs;
Prüfen von Seriennummern der empfangene PDUs und Bestimmen, ob eine nicht empfangene PDU vorhanden ist oder nicht;
wenn die PDUs ohne Verlust empfangen wurden, Schätzen einer Länge der Tx-Entitätswarteschlange jedes Mal, wenn eine PDU empfangen wird, und Berichten eines Status an die Tx-Entität (200), wenn der geschätzte Wert den vorher eingestellten Schwellwert übersteigt; und
wenn eine nicht empfangene PDU vorhanden ist, Bestimmen, ob aufeinanderfolgende Poll-Bits in den empfangenen PDUs gesetzt sind oder nicht, und Berichten eines Status an die Tx-Entität (200) sofort oder nach einer bestimmten Zeit.

6. Verfahren nach Anspruch 5, ferner umfassend:
wenn ein Statusbericht von der Rx-Entität (250) empfangen wird, Sendewiederholen des Pakets oder Anpassen einer Länge der Sender, Tx,-Entitätswarteschlange.

7. Verfahren nach Anspruch 6, wobei der Paketverzögerungsschwellwert durch Subtrahieren einer Funksendeverzögerung, einer Rx-Verarbeitungsverzögerung und einer durch Sendewiederholung verursachten Verzögerung von einer Maximalzeit bestimmt wird, welche benötigt wird, um das Paket von einer Sender, Tx, -Funkverbindungssteuerung, RLC, - Schicht an eine Rx-RLC-Schicht zu senden.

8. Verfahren nach Anspruch 6, wobei die Länge der Tx-Entitätswarteschlange durch Subtrahieren einer Seriennummer einer PDU entsprechend einem letzten Statusbericht von einer Seriennummer einer gegenwärtig empfangenen PDU geschätzt wird.

## Revendications

1. Appareil d'optimisation d'un temps de rapport de statut nécessaire à une retransmission de données entre un eNodeB et un équipement utilisateur, UE, dans un système de communication mobile, l'appareil étant adapté pour fonctionner en tant qu'entité émettrice, Tx, (200), comprenant :
un comparateur de temps de traitement de paquet (210) pour comparer une valeur de seuil de retard de paquet réglée avec un temps de traitement d'un paquet de protocole Internet, IP, à transmettre ; et
un rapporteur de retard de traitement de paquet (220) pour régler des bits de sondage afin d'identifier le paquet IP dont le retard est supérieur à la valeur de seuil de retard de paquet en fonction du résultat de comparaison dans une unité de données de protocole, PDU, et une ou plusieurs PDU suivantes contenant le paquet IP retardé, et transmettre toutes les PDU à une entité réceptrice, Rx, (250), dans lequel, lorsque les PDU transmises avec des bits de sondage réglés ont une PDU non reçue à l'entité Rx, un rapport de statut immédiat est transmis de l'entité Rx à l'entité Tx.

2. Appareil selon la revendication 1, dans lequel le comparateur de temps de traitement de paquet (210) mémorise la valeur de seuil de retard de paquet réglée en soustrayant un retard de transmission radio, un retard de traitement Rx et un retard provoqué par une retransmission à un temps maximum pris pour le paquet à transmettre d'une couche de commande de liaison radio, RLC, Tx à une couche RLC Rx.

3. Appareil selon la revendication 1 ou 2, adapté en outre pour fonctionner en tant qu'entité réceptrice, Rx, (250), comprenant :
un déterminateur de réception d'unité de données de protocole, PDU, (260) pour déterminer si la PDU transmise à partir de l'entité émettrice, Tx, (200) est ou n'est pas reçue sans perte ; et
un émetteur de rapport de statut (270) pour rapporter un statut à l'entité Tx (200) à des temps différents en fonction d'un résultat de détermination si la PDU est ou n'est pas reçue sans perte et d'un résultat de réception d'une PDU avec des bits de sondage réglés pour identifier que le paquet IP contenu a été traité dans l'entité Tx (200) pendant un temps supérieur à la valeur de seuil de retard de paquet,
dans lequel l'émetteur de rapport de statut (270) estime une longueur de la file d'attente d'entité Tx chaque fois qu'une PDU est reçue lorsque la PDU est reçue sans perte, et rapporte le statut à l'entité Tx (200) lorsque la valeur estimée dépasse la valeur de seuil précédemment réglée, et
dans lequel, lorsqu'il y a une PDU non reçue, l'émetteur de rapport de statut (270) effectue le rapport de statut immédiatement ou après un temps spécifique selon que des bits de sondage pour identifier le paquet de protocole Internet, IP, dont le retard est supérieur à la valeur de seuil de retard sont ou ne sont pas respectivement réglés successivement dans la PDU reçue.

4. Appareil selon la revendication 3, dans lequel l'émetteur de rapport de statut (270) estime la longueur de la file d'attente d'entité Tx en soustrayant un numéro de série d'une PDU correspondant à un dernier rapport de statut à un numéro de série d'une PDU actuellement reçue.

5. Procédé d'optimisation d'un temps de rapport de statut nécessaire à une retransmission de données entre un eNodeB et un équipement utilisateur, UE, dans un système de communication mobile, comprenant :
la comparaison d'une valeur de seuil de retard de paquet réglée à un temps de traitement d'un paquet de protocole Internet, IP, à transmettre ; et
lorsque le temps de traitement du paquet IP à transmettre dépasse la valeur de seuil de retard de paquet réglée, le réglage de bits de sondage dans une unité de données de protocole, PDU, et dans une ou plusieurs PDU suivantes contenant le paquet IP retardé, et la transmission de toutes les PDU à une entité réceptrice, Rx, (250),
le procédé comprenant en outre :
la réception des PDU transmises à partir d'une entité émettrice, Tx, (200) ;
la vérification des numéros de série des PDU reçues et la détermination s'il y a ou s'il n'y a pas de PDU non reçue ;
lorsque les PDU sont reçues sans perte, l'estimation d'une longueur de la file d'attente d'entité Tx chaque fois que chacune des PDU est reçue, et le rapport d'un statut à l'entité Tx (200) lorsque la valeur estimée dépasse la valeur de seuil précédemment réglée ; et
lorsqu'il y a une PDU non reçue, la détermination si des bits de sondage successifs sont ou ne sont pas réglés dans les PDU reçues, et le rapport d'un statut à l'entité Tx (200) immédiatement ou après un temps spécifique respectivement.

6. Procédé selon la revendication 5, comprenant en outre :
lorsqu'un rapport de statut est reçu de l'entité Rx (250), la retransmission du paquet ou le réajustement d'une longueur de la file d'attente d'entité émettrice, Tx.

7. Procédé selon la revendication 6, dans lequel la valeur de seuil de retard de paquet est déterminée en soustrayant un retard de transmission radio, un retard de traitement Rx et un retard provoqué par une retransmission à un temps maximum pris pour le paquet à transmettre d'une couche de commande de liaison radio, RLC, émettrice, Tx, à une couche RLC Rx.

8. Procédé selon la revendication 6, dans lequel la longueur de la file d'attente d'entité Tx est estimée en soustrayant un numéro de série d'une PDU correspondant à un dernier rapport de statut à un numéro de série d'une PDU actuellement reçue.
